# EUROPEAN PATENT SPECIFICATION

(11) **EP 4 201 858 B1**
(45) Date of publication and mention of the grant of the patent: **04.06.2025**
(21) Application number: 22211038.9
(22) Date of filing: 02.12.2022
(51) Int. Cl.: B65H 57/18, G01M 11/08, B65H 49/32, G01L 5/04

(54) **OPTICAL FIBRE PAY-OFF SYSTEM AND OPTICAL FIBRE PROOF TEST SYSTEM**
GLASFASER-ABWICKELSYSTEM UND GLASFASERPRÜFSYSTEM
SYSTÈME DE DÉROULEMENT DE FIBRE OPTIQUE ET SYSTÈME DE TEST D'ÉPREUVE DE FIBRE OPTIQUE

(30) Priority: 27.12.2021 IT 202100032675
(43) Date of publication of application: 28.06.2023
(73) Proprietor: Draka Comteq France SAS, 89100 Paron (FR)
(72) Inventor: SHIRLEY, Paul, PARON (FR); MONTAIGNE, Nelly, PARON (FR); CAILLERET, Bernard, PARON (FR)
(74) Representative: Praxi Intellectual Property Milano

(56) References cited:
- WO-A1-2016/128784
- CN-A- 109 132 695
- US-A- 2 988 292
- US-A1- 2020 087 102

## Description

### BACKGROUND

### Technical field

The present invention relates to an optical fibre pay-off system and particularly but not limitatively, a proof test machinery.

### Description of the Related Art

As it is known, an optical fibre is obtained by producing a primary preform (or core rod), overcladding the primary preform and drawing it to form the optical fibre. For ease of handling and shipping, the optical fibre is then wound onto a spool at high speed.

Fibre production also includes a testing phase to ensure that the fibres meet the requirements set on them by cable production. One of the tests conducted on fibres is the proof test having the purpose of ensuring that the fibre sustains the tensile stress to which is may be subjected during cable production or cable installation.

In the proof test machine, the optical fibre is first guided at high speed to an input pulling device and further to an output pulling device and then onto the shipping spool. The input and output pulling devices subject the optical fibre to a predefined value of tensile stress, as a result of which the fibre breaks if the fibre strength is insufficient.

Document WO2016/128784 describes a method for controlling rotation of a winding spool of proof test machine for optical fibres which provides for a fiber accumulation zone adapted to accumulate a predetermined fiber length preventing that a fiber broken end resulting from the break going beyond the input point of the winding spool.

Document WO2002/35210 discloses a proof-testing machine for optical fibre wherein the fibre end is guided in the case of break between the first and the second pulling device by means of a channel, which guides the fibre to the second pulling device.

It is noticed that the fibre to be tested is fed to the proof test machine by unwinding it from a draw spool around which the fibre is wound.

Typically, proof-test is carried out on an optical fibre formed by a core, a cladding and a buffer, i.e. on the fibre as obtained before the application of a jacket. In some cases, the buffer is coated with a dye or ink to make the fibre assuming a specific colour. Such colour allows distinguishing each fibre and its function among other fibres in an optical cable. The colour of an optical fibre buffer can be chosen among several possible colours (e.g. up to thirteen colours) and includes: white, red, black.

According to a known machine, the fibre unwinding is performed by a pulley mounted on a pay-off arm which guide the fibre along the draw spool by moving from left to right to follow the winding. According to this known machine, two optical sensors detect the fibre passing in front of them and in consequence activate a motor to move the pay-off arm from left to right and vice versa. More particularly, when the fibre is detected by one optical sensor the winding arm is moved by a predetermined amount so that the fibre essentially is re-centred between the two optical sensors. As the fibre naturally unwinds along the draw spool, the fibre angle between the fibre and the pulley increases until such time as the sensor detects the fibre and the system moves the winding arm again to re-centre the fibre between the two optical sensors. Said optical sensors are of the type based on reflected light and include an emitter and a receiver placed in the same housing.

The optical sensor has a behaviour depending on the reflective surface and, particularly, on the colour of the optical fibre buffer, which may influence the detection capability. Therefore, the sensor can include an adjustment optical module (i.e. additional optical component, such as one or more lenses) that makes it suitable for reflective light having frequency different from the one for which the sensor is configured. However, the use of the optional adjustment optical module is often not practical in optical fibre pay-off system, where it would require several adjustments in a day.

Document CN-A-109132695 describes a cable release system comprising a main frame, a spool and a driver. SUMMARY OF THE INVENTION

The Applicant observes that the known optical fibre pay-off arms, employing optical sensors detecting the fibre passage, do not show a satisfying use flexibility and require excessive maintenance activity. Particularly, the adjustment optical module has to be re-configured or changed as an optical fibre with different colour has to be detected. Furthermore, according to another possible situation, the adjustment optical module can be damaged over time (e.g. from loose fibre after a break) and therefore its readjusting or substitution is necessary.

The Applicant has found that a pay-off arm provided with a tilting support rotatable under a corresponding action of the fibre optic to be unwound and having an activation body which can be selectively detected by two proximity sensors shows performances independent from the optical fibre colours.

According to a first aspect, the present invention relates to an optical fibre pay-off system comprising.
a draw spool around which an optical fibre is wound and defining a longitudinal axis;
a pay-off arm movable parallel to said longitudinal axis and engaged with a pay-off portion of the optical fibre;
a controller configured to receive first and second position signals and cause said pay-off arm selectively moving in a first direction and in an opposite second direction;
a first and second proximity sensors mounted on said pay-off arm;
a tilting support rotatably mounted on said pay-off arm;
an activation body fixed to said tilting support and extending between said first and second proximity sensors to be selectively detected by said sensors according to positions assumed by the tilting support;
a first and a second contact elements fixed to said tilting support and defining an intermediate space in which the pay-off portion can move;
wherein the tilting support is rotatable under a corresponding action of the pay-off portion on said first and second contact elements and configured to selectively assume:
   a first detection position in which the activation body is detected by the second proximity sensor which generates a position signal, and
   a second detection position in which the activation body is detected by the first proximity sensor which generates a further position signal.

In an embodiment, said proximity sensors respectively include a sensor device selected from the group: inductive sensor, optical sensors, capacitive sensors, magnetic sensors.

In an embodiment, said controller is configured to alternatively receive the position signal and the further position signal and cause said pay-off arm to selectively move in the first direction and in the opposite second direction in order to reach a position in which the activation body is not detected by either first proximity sensor and second proximity sensor.

In an embodiment, said system further includes a base structure supporting the first and second proximity sensors and the tilting support. In an embodiment, said pay-off arm comprises:
a movable slip arranged to be translated parallel to said longitudinal axis; said base structure being mechanically connected to said movable slip;
at least a first pulley mechanically connected to the movable slip to guide an unwinding of said pay-off portion from the draw spool.

In an embodiment, the system further comprises a move assembly configured to move the movable pay-off arm in said first and second directions and having:
- a linear actuator connected to said slip;
- a motor mechanically connected to said linear actuator to move the slip and configured to be controlled by said controller.

In an embodiment, said base structure comprises a support plate on which the tilting support and the first and second proximity sensors are fixed and a connection plate mechanically connected to said slip. In an embodiment, said tilting support comprises: a pivot fixed to said base structure and a rotatable element mounted to said base structure by said pivot.

In an embodiment, said activation body is rod shaped and extends from a first side portion of the rotatable element towards a gap region formed between the first and second proximity sensors; said first and second contact bodies are rod shaped and extend from a second side portion of the rotatable element separated from said first side portion by the pivot.

In an embodiment, the system is configured to operate as proof test system of said optical fibre and further comprises:
- a test apparatus configured to subject the optical fibre unwound from the draw spool to a proof test procedure;
- a take-up apparatus configured to wound the optical fibre exiting the test apparatus onto a shipping spool.

In an embodiment said test apparatus comprises: an input capstan provided by a first drive motor and an output capstan provided by a second drive motor and a plurality of intermediate pulleys; wherein: the input capstan, the plurality of intermediate pulleys and the output capstan are configured to guide the optical fibre and apply a force to the optical fibre depending from rotation velocities of said output capstan and said input capstan.

In an embodiment, said test apparatus further comprises: a load cell configured to measure a tension value associated with optical fibre in the test apparatus.

In an embodiment, said the test apparatus further comprises: a fibre break cell configured to detect a break of the optical fibre and send corresponding break detection signal to the controller; the controller being configured to initiate a stop of the movement of the optical fibre towards the take-up apparatus on the basis of said break detection signal.

In an embodiment, said take-up apparatus comprises: a movable take-up arm which is configured to be engaged with the optical fibre and move parallel to a further longitudinal axis defined by said shipping spool. In an embodiment, the system further comprises: an anti-whipping assembly having at least one accumulator pulley (37) guiding the optical fibre existing the output capstan.

According to an example, the present disclosure relates to a position detection device comprising:
a base structure;
a first proximity sensor and a second proximity sensor mounted on said base structure;
a tilting support rotatably mounted on said base structure;
an activation body fixed to said tilting support and extending between said first and second proximity sensors to be selectively detected by said sensors according to positions assumed by the tilting support;
a first and a second contact elements fixed to said tilting support and defining an intermediate space in which a fibre optic portion can move;
wherein the tilting support is rotatable under a corresponding action of the optical fibre portion on said first and second contact elements and is configured to selectively assume:
   a first detection position in which the activation body is detected by the second proximity sensor, and
a second detection position in which activation body is detected by the first proximity sensor.

### BRIEF DESCRIPTION OF THE DRAWINGS

Further characteristics and advantages will be more apparent from the following description of the various embodiments given as a way of an example with reference to the enclosed drawings in which:
Figure 1 schematically shows an optical fibre pay-off apparatus according to an example;
Figure 2 shows an example of a position detection device employable in said optical fibre pay-off apparatus;
Figure 3 shows a first operative configuration of said position detection device;
Figure 4 shows a second operative configuration of said position detection device;
Figure 5 shows a third operative configuration of said position detection device;
Figure 6 schematically shows a proof test system comprising said optical fibre pay-off apparatus;

### DETAILED DESCRIPTION

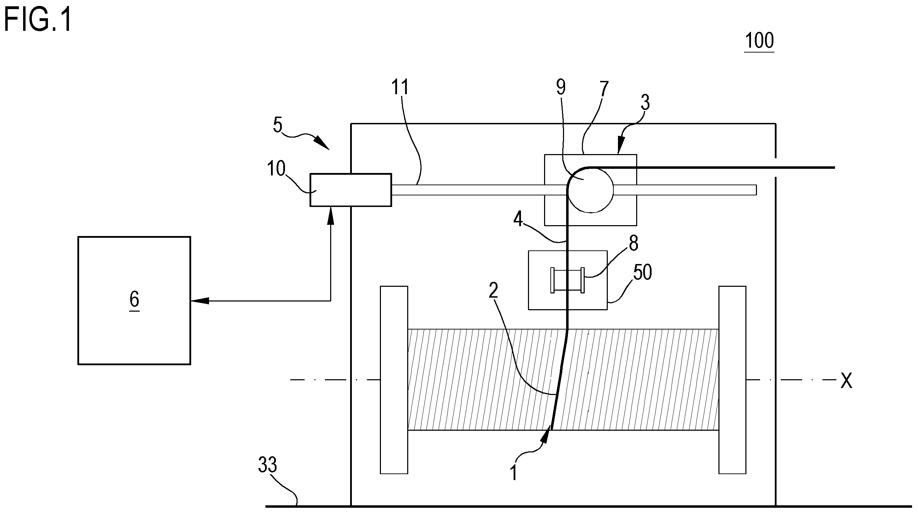

Figure 1 schematically shows an optical fibre pay-off apparatus 100 comprising a draw spool 1, an optical fibre 2, wound around the draw spool 1, and a movable pay-off arm 3. Particularly, the draw spool 1 defines a longitudinal axis X. The movable pay-off arm 3 is configured to be engaged with a pay-off portion 4 of the optical fibre 2 and is movable parallel to said longitudinal axis according to a first direction (e.g. from left to right) or an opposite second direction (e.g. from right to left).

Particularly, optical fibre pay-off apparatus 100 comprises a move assembly 5 configured to cause a movement of the movable pay-off arm 3 in the first direction or in the second direction. The move assembly 5 is connected to a controller 6 which is configured to control parameters characterizing the operation of the move assembly 5 and therefore the movement of the movable pay-off arm 3.

The controller 6 can be a computer comprising a non-volatile memory (e.g. a read-only memory (ROM) or a hard disk), a volatile memory (e.g. a random access memory or RAM) and a processor (components not shown). The non-volatile memory is a non-transitory computer-readable carrier medium storing executable program code instructions.

As an example, the optical fibre 2 can be a known optical fibre such as a multimode optical fibre, a single mode optical fibre or a special-purpose optical fibre. Particularly, the optical fibre 2 has a core, a cladding and a buffer and, more particularly, it is not yet provided with a covering jacket (elements not shown).

According to an embodiment, the buffer is coated with a dye or ink to make the optical fibre 2 assuming a specific colour. As it is known, a colour allows distinguishing each fibre and its function among other fibres in an optical cable.

According to an embodiment, the buffer comprises two layers, a primary coating and a secondary coating. The secondary coating is the external layer of the buffer. In some embodiments, the secondary coating is coated with a dye or ink to make the optical fibre 2 assuming a specific colour. In other embodiments, the secondary coating is made of a material, such as a resin, wherein a colouring additive is included.

The colour of an optical fibre buffer can be chosen among several possible colours (e.g. up to thirteen colours) and includes, as an example: white, red, black, blue, brown, green, grey, orange, aqua, rose, violet, yellow.

According to an example, the movable pay-off arm 3 comprises a slip 7 and at least a first pulley 8 mechanically connected to the slip 7. In accordance with such example, the first pulley 8 is rotatable around an axis parallel to the longitudinal axis X. Particularly, the movable pay-off arm 3 is also provided with a second pulley 9 mechanically connected to the slip 7 and rotatable around an axis perpendicular to the longitudinal axis X.

In accordance with an example, the move assembly 5 comprises a motor 10 connected to a linear actuator, such as an example, a ball screw, comprising a screw 11 (or another guide) on which the slip 7 can translate.

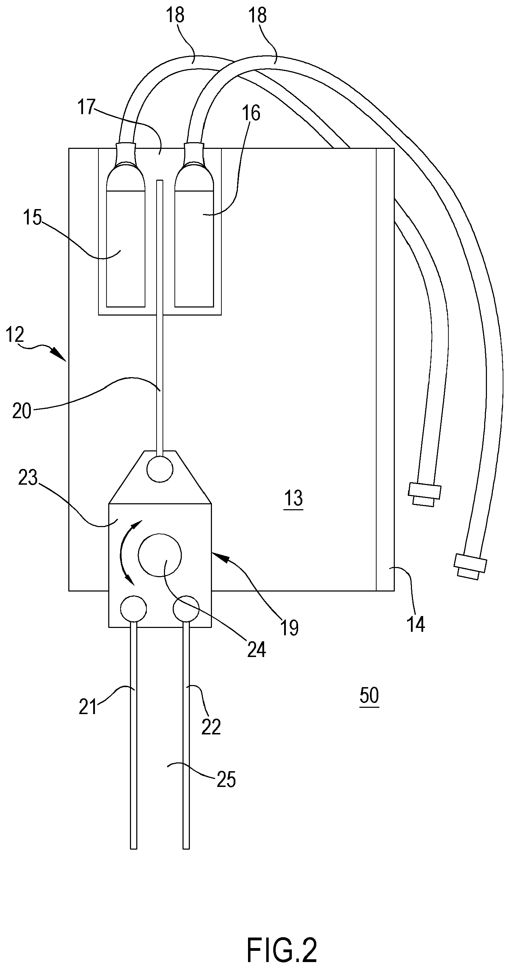

Moreover, the optical fibre pay-off apparatus 100 comprises a position detection device 50, only schematically represented in figure 1. Figures 2 shows an embodiment of said position detection device 50 comprising a base structure 12 to be mechanically connected to the pay-off arm 3 and particularly to the slip 7.

As an example, the base structure 12 includes a support plate 13 fixed to a transversal (e.g. perpendicular) connection plate 14 to be mechanically coupled to the slip 7 of the movable pay-off arm 3. A first proximity sensor 15 and a second proximity sensor 16 are mounted on said support plate 13 so as to be separated by a gap region 17.

The first proximity sensor 15 and the second proximity sensor 16 may include a respective inductive sensor which, as known, operates by electromagnetic induction to detect an object. The first proximity sensor 15 and the second proximity sensor 16 are connected to respective cables 18 for carrying signals generated by the proximity sensors. Alternatively to the inductive sensors, other type of proximity sensors can be employed, such as: optical sensors, capacitive sensors, magnetic sensors. (To be checked.

Moreover, the position detection device 50 is provided with a tilting support 19 rotatably mounted on said support plate 13 to which an activation body 20, a first contact element 21 and a second element 22 are fixed. The tilting support 19 comprises a rotatable element 23 rotatable fixed to the support plate 13 by a pivot 24. At a first portion end of the rotatable element 23 the activation body 20 is fixed, which can be, as an example, a rod or a bar that extends up to the gap region 17 formed between the first proximity sensor 15 and the second proximity sensor 16. The activation body 20 is made by a material (as an example, stainless steel) that can be detected by the first proximity sensor 15 and the second proximity sensor 16 when the activation body 20 is in a corresponding detection range.

The first contact element 21 and the second element 22 are fixed to a second portion end of the rotatable element 23. Particularly, the first portion end and the second portion end of the rotatable element 23 are on opposite sides with respect to the pivot 24. Particularly, the first contact element 21 and the second element 22 are under the form of corresponding bars extending parallel each other, and in a direction opposite to the extending direction of the activation body 20.

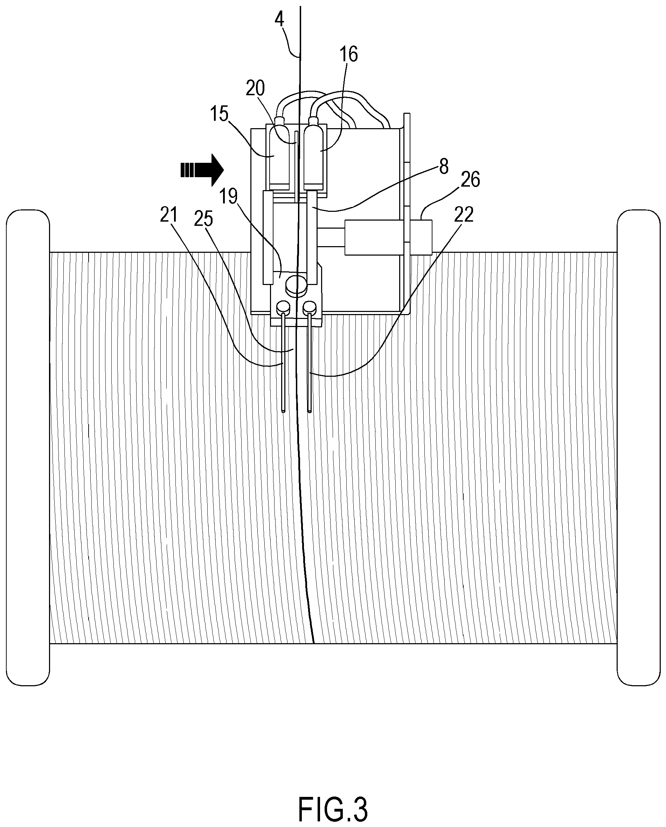

The first contact element 21 and the second element 22 define an intermediate space 25 wherein the pay-off portion 4 of the optical fibre 2 can move during a pay-off procedure. As visible from figures 3 and 4 and 5 (showing part of the pay-off arm 3), the first pulley 8, the gap region 17 and the intermediate space 25 have respective centre lines included into a plane perpendicular to the longitudinal axis X, when the tilting support 19 is not subject to a contact action by the pay-off portion 4 of the optical fibre 2.

Figure 3-5 also show a further motor 26 optionally provided to rotate the first pulley 8 for facilitating the unwinding of the optical fibre 2 from the draw spool 1.

An example of operation of the pay-off system 100 is described hereinbelow. According to said example, the controller 6 is configured to cause, via the motor 10, a movement of the pulley 8 of the pay-off arm 3 along the screw 11 only when the activation body 20 is detected by the first proximity sensor 15 or the second proximity sensor 16.

Figure 3 shows the situation in which the activation body 20 is substantially aligned with the centre line of the of the gap region 17 and is not detected by either first proximity sensor 15 and second proximity sensor 16. In accordance with the described example, in this situation the controller 6 does not activate the motor 10 and the first pulley 8 of the pay-off arm 3 in not moved along the screw 11.

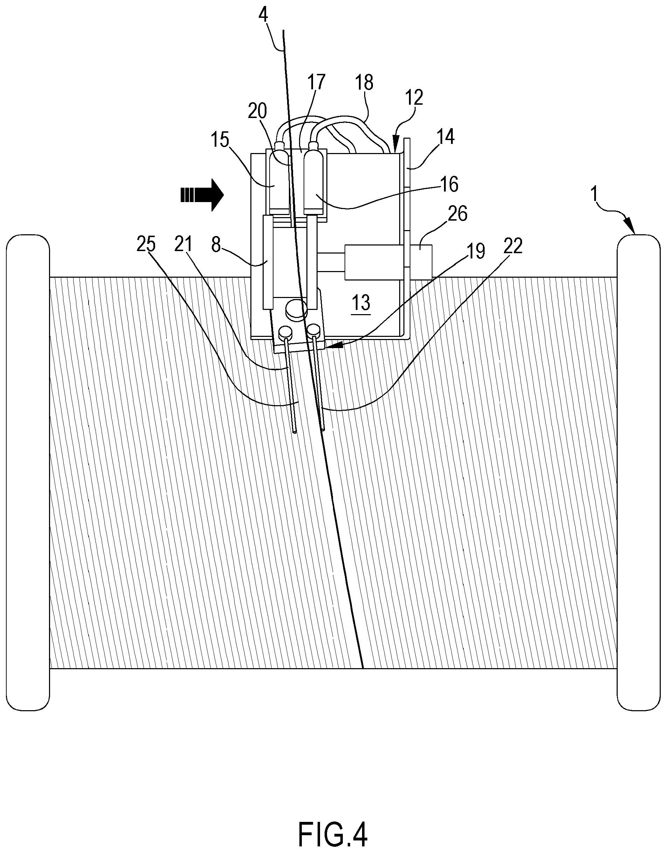

As shown in figure 4, while the unwinding occurs the pay-off portion 4 of the optical fibre 2 comes into contact with the second element 22 because of an inherent winding angle assumed by the pay-off portion 4 or a change in the winding direction around the draw spool 1. The change of winding occurs, as an example, when the optical fibre 2 reaches the end side (e.g. the left side) of the draw spool 1. Due to the physical contact of the pay-off portion 4 on the second element 22, the tilting support 19 rotates counter-clockwise and therefore the activation body 20 enters the detection region of the first proximity sensor 15. The first proximity sensor 15 detects presence of the activation body 20 and generates a corresponding first detection signal that is received by the controller 6, via the cable 18.

On the basis of the first detection signal, the controller 6 generates a command signal which is provided to the motor 10 so as to cause a motion of the pay-off arm 3 of a preestablished amount in order to re-establish the condition shown in fig. 3 in which the activation body 20 is substantially aligned with the centre line of the of the gap region 17.

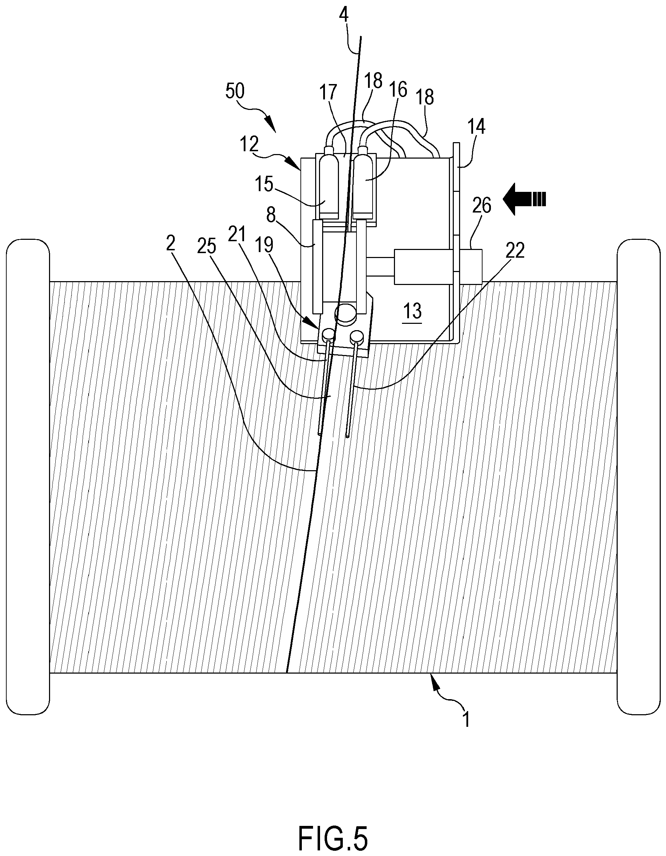

In greater detail, the slip 7, supporting the first pulley 8 and the second pulley 9, starts moving from left to right so following the optical fibre 2 due to the action of the motor 10 on the screw 11. The pay-off portion 4 of the optical fibre 2 assume again the position shown in figure 3.Figure 5 refers to the situation in which, as an example, starting from the configuration of figure 3 or figure 4, the pay-off portion 4 of the optical fibre 2 comes into contact with the first element 21 because of the inherent winding angle or another change in the winding direction around the draw spool 1. As an example, the optical fibre 2 reaches the right side of the draw spool 1. Due to the physical contact of the pay-off portion 4 on the first element 21, the tilting support 19 rotates clockwise and therefore the activation body 20 enters the detection region of the second proximity sensor 16. The second proximity sensor 16 detects the presence of the activation body 20 and generates a corresponding second detection signal that is received by the controller 6.

The controller 6 generates another command signal which is provided to the motor 10 so as to cause a motion of the pay-off arm 3 of the preestablished amount in a direction opposite to the previous described one. Therefore, the slip 7, supporting the first pulley 8 and the second pulley 9, starts moving from right to left so following the optical fibre 2. The pay-off portion 4 of the optical fibre 2 assume again the position shown in figure 3 and the motor 10 is deactivated. It is noticed that the above described pay-off apparatus 100 employing the position detection device 50 allows unwinding the optical fibre 2 from the draw spool 1 without any human intervention and without damaging the coating of the optical fibre.

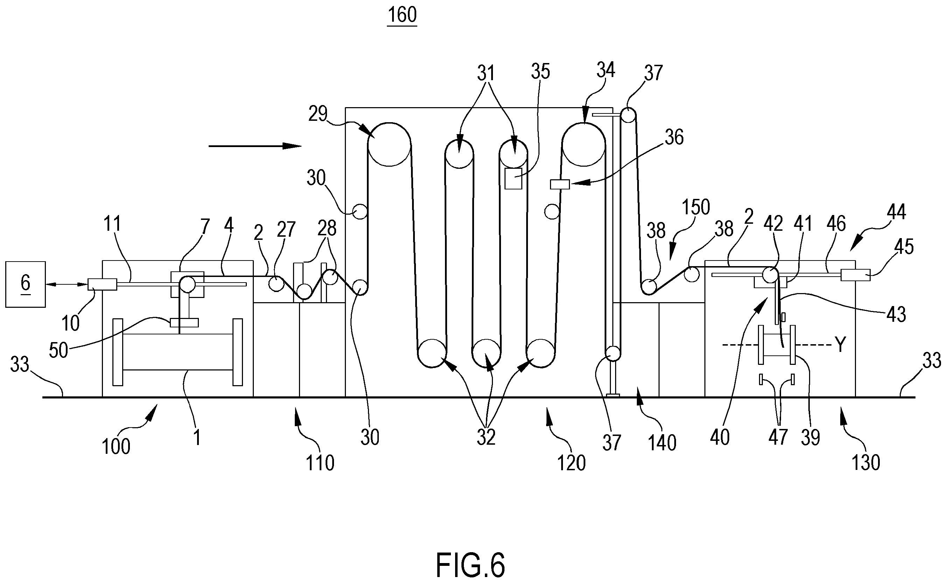

According to a preferred embodiment, the optical pay-off apparatus 100 can be employed, not exclusively, in a proof test system 160, as the one schematically represented in figure 6.

Figure 6 shows an example of the proof test system 160 comprising the optical fibre pay-off system 100 (analogous or identical to that above described), a dancer assembly 110, a test apparatus 120 and a take-up apparatus 130. Particularly, the proof test system 160 lies on a horizontal base 33 and is configured to operate under the control of the controller 6.

The dancer assembly 110 comprises at least one fixed pulley 27 and at least one position adjustable pulley 28 that guide the optical fibre 2, unwound from the draw spool 1, towards the proof test apparatus 120. As an example, two position adjustable pulleys 28 are employed. Moreover, the dancer assembly 110 is configured to set a suitable tension between the draw spool 1 and an input capstan 29 of the test apparatus 120 by a fixed weight. The positions of the adjustable pulleys 28 are adjusted by the controller 6 to correctly synchronize the speed of the motor 10 and/or the further motor 26 (if adopted) with that of the input capstan 29.

As an example, the test apparatus 120 is provided with at least one input pulley 30, the already mentioned input capstan 29, a plurality of upper pulleys 31, a plurality of lower pulleys 32 and an output capstan 34. Particularly, the input capstan 29 and the output capstan 34 are positioned at a same high from the horizontal base 33, greater than the high at which the dancer assembly 110 is positioned. The upper pulleys 31 are arranged, according to an example, at the same high of the input capstan 29, while the lower pulleys 32 are placed at lower level, such as the one of the longitudinal axis X of the draw spool 1.

The input capstan 29 is configured to draw the optical fibre 2 into the test apparatus 120 and is provided with a respective drive motor (not shown) which operates according to a line speed set point provided by the controller 6. Particularly, a numerical counter (not shown), used to count the length of the portion of the optical fibre 2 which is submitted to the test, is arranged between the input capstan 29 and the corresponding drive motor.

The test apparatus 160 provides a path for the optical fibre 2 comprising: the input capstan 29 followed by a sequence including lower pulleys 32 interleaved by upper pulleys 31 and followed by the output capstan 34.

A load cell 35 is, as an example, fixed to one of the upper pulleys 31 or the lower pulleys 32 to measure a tension value of the optical fibre 2 in the test apparatus 160. Particularly, the measured tension value can be provided to the controller 6.

Furthermore, the test apparatus 160 comprises a fibre break cell 36 configured to detect an online break of the optical fibre 2 and, in this case, send a corresponding signal to the controller 6 which can initiate a quick stop of the optical fibre shipping towards the take-up apparatus 130. As an example, such quick stop can be performed in no more than 200 ms, considering a speed of 1600 m/min of the optical fibre shipping. The stop of optical fibre shipping is obtained by interrupting/braking the rotation of the draw spool 1, the input capstan 29, the output capstan 34. It is also observed that above stop/braking procedure shows the advantage of avoiding the undesired whipping effect that can occur when the optical fibre breaks.

The output capstan 34 is provided with a respective drive motor (not shown) that operates under the control of the controller 6 which takes into consideration tension values measured by the load cell 35. Typically, the output capstan 34 turns faster than the input capstan 29. Particularly, another numerical counter (not shown) is arranged between the output capstan 34 and the corresponding drive motor to measure the length of optical fibre 2 that is spooling.

Furthermore, the test apparatus 160 may comprise an anti-whipping assembly 140 and a take-up dancer 150 arranged between the anti-whipping assembly 140 and the take-up apparatus 130.

The anti-whipping assembly 140 comprises at least one accumulator pulley 37 guiding the optical fibre 2 existing the output capstan 34. The anti-whipping assembly 140 is designed to avoid a whipping effect at the take-up apparatus 130 that could occur when the optical fibre 2 breaks in the test apparatus 120. The accumulator pulleys 37 cause the fibre end to rotate whilst giving time for stopping the operating of the take-up apparatus 130.

The take-up dancer 150, including at least one dancer pulley 38, is configured to set the tension of the optical fibre 2 in the take-up apparatus 130. The angular positions of the dancer pulleys 38 are used by the controller 6 to synchronise the speed of a motor of the take-up apparatus 130 and the speed of the output capstan 34.

The take-up apparatus 130 comprises a shipping spool 39 around which the optical fibre 2 is to be wound and defining a further longitudinal axis Y. The shipping spool 39 can be rotated around said further longitudinal axis Y by a respective drive motor controlled by the controller 6. Moreover, the take-up apparatus 130 is provided with a movable take-up arm 40 which is configured to be engaged with the optical fibre 2 and is movable parallel to further longitudinal axis Y in opposite directions.

According to an example, the movable take-up arm 40 comprises a further slip 41 and a first shipping pulley 42 mechanically connected to the further slip 41. In accordance with such example, the first shipping pulley 8 is rotatable around an axis perpendicular to the further longitudinal axis Y. Particularly, the movable take-up arm 40 is also provided with a second shipping pulley 43 mechanically connected to the further slip 41 and rotatable around an axis parallel to the further longitudinal axis Y.

The take-up apparatus 130 includes a take-up move assembly 44 which comprises a take-up motor 45 connected to a further linear actuator, such as an example, a ball screw, comprising a further screw 46 (or another guide) on which the further slip 41 can translate.

Preferably, the take-up apparatus 130 is provided by at least one anti-static nozzle 47 configured to reduce the amount of electrical static charge generated by the moving optical fibre 2 and/or the rotation of the shipping spool 39. As it is known, an anti-static nozzle produces a stream of ionized compressed air to neutralize static on surfaces and effectively blow-off particles.

The proof test system 160 can be used to test the mechanical strength of an optical fibre 2. The proof test system 160 allows removing fibre portions that show a low quality and transfer the optical fibre unwound from the draw spool 1 onto more than one shipping spool 39, in accordance with specific need. As an example, the shipping spool 39 is adapted for fibre length comprised between 25 km and 50 km while the draw spool 1 is in general adapted for a fibre length between 5 km and 800 km.

The proof test system 160 is configured for applying a specified tensile load to continuous lengths of the optical fibre 2, according to a proof test cycle. The tensile load is applied for a short time as possible, yet sufficiently long to ensure the glass of the fibre experiences the proof stress.

The test can be performed according the standard IEC 60793-1-30 which fixes a proof test level with 1 % elongation for 1 second. To reach that conditions a force applied to the optical fibre is of 0.72 Gpa (100 Kpsi). The force is applied to the optical fibre by means of turning the output capstan 34 faster than the input capstan 29. The force applied is controlled and adjusted by means of the load cell 35.

It is noticed that the pay-off apparatus 100 provided with the position detection 50 allows efficiently performing the proof test cycle by the proof test system 160, avoiding any damage of the optical fibre cladding and reaching a high level of automation of the proof test cycle.

Moreover, contrary to the known system employing a pay-off device having two optical sensors detecting the fibre passage in front of them, the optical fibre pay-off apparatus above described does not have performances depending on the fibre colours but it can efficiently operate with optical fibres having any possible distinguishing colour. This allow to avoid adjustment of the proximity sensor when the fibre colour change and reduce maintenance activities of the apparatus.

### Symbols of the drawings

- position detection device 50
- optical fibre pay-off apparatus 100
- dancer assembly 110
- test apparatus 120
- take-up apparatus 130
- whipping assembly 140
- take-up dancer 150
- proof test system 160
- draw spool 1
- longitudinal axis X
- optical fibre 2
- movable pay-off arm 3
- pay-off portion 4
- move assembly 5
- controller 6
- slip 7
- first pulley 8
- second pulley 9
- motor 10
- screw 11
- base structure 12 includes
- support plate 13
- connection plate 14
- first proximity sensor 15
- second proximity sensor 16
- gap region 17
- cable 18
- tilting support 19
- activation body 20
- first contact element 21
- second element 22
- rotatable element 23
- pivot 24
- intermediate space 25
- further motor 26
- fixed pulley 27
- position adjustable pulley 28
- input capstan 29
- input pulley 30
- upper pulleys 31
- lower pulleys 32
- horizontal base 33
- output capstan 34
- load cell 35
- fibre break cell 36
- accumulator pulley 37
- dancer pulley 38
- shipping spool 39
- movable take-up arm 40
- further longitudinal axis Y
- further slip 41
- first shipping pulley 42
- second shipping pulley 43
- a take-up move assembly 44
- take-up motor 45
- further screw 46
- anti-static nozzle 47

## Claims

1. An optical fibre pay-off system (100, 160) comprising.
a draw spool (1) around which an optical fibre (2) is wound and defining a longitudinal axis (X);
a pay-off arm (3) movable parallel to said longitudinal axis (X) and engaged with a pay-off portion (4) of the optical fibre (2);
a controller (6) configured to receive first and second position signals and cause said pay-off arm (3) selectively moving in a first direction and in an opposite second direction;
the system (100, 160) being **characterized by** further comprising:
a first (15) and second proximity sensors (16) mounted on said pay-off arm (3);
a tilting support (19) rotatably mounted on said pay-off arm (3);
an activation body (20) fixed to said tilting support (19) and extending between said first (15) and second proximity (16) sensors to be selectively detected by said sensors according to positions assumed by the tilting support (19);
a first (21) and a second contact elements (22) fixed to said tilting support (19) and defining an intermediate space (25) in which the pay-off portion (4) can move;
wherein the tilting support (19) is rotatable under a corresponding action of the pay-off portion (4) on said first (21) and second (22) contact elements and configured to selectively assume:
a first detection position in which the activation body (20) is detected by the second proximity sensor (16) which generates a position signal, and
a second detection position in which the activation body (20) is detected by the first proximity sensor (15) which generates a further position signal.

2. The system (100) of claim 1, wherein said first (15) and second (16) proximity sensors respectively include a sensor device selected from the group: inductive sensor, optical sensors, capacitive sensors, magnetic sensors.

3. The system (100) of claim 1, wherein the controller (6) is configured to:
alternatively receive the position signal and the further position signal and cause said pay-off arm (3) to selectively move in the first direction and in the opposite second direction in order to reach a position in which the activation body (20) is not detected by either first proximity sensor and second proximity sensor.

4. The system of claim 1, further including:
a base structure (12) supporting the first (15) and second proximity sensors (16) and the tilting support (19).

5. The system (100) of claim 4, wherein said pay-off arm (3) comprises:
a movable slip (7) arranged to be translated parallel to said longitudinal axis (X); said base structure being (12) mechanically connected to said movable slip (7);
at least a first pulley (8) mechanically connected to the movable slip (7) to guide an unwinding of said pay-off portion (4) from the draw spool (1).

6. The system (100) of claim 5, further comprising a move assembly (5) configured to move the movable pay-off arm (3) in said first and second directions and having:
a linear actuator (11) connected to said slip (7);
a motor (10) mechanically connected to said linear actuator (11) to move the slip (7) and configured to be controlled by said controller (6).

7. The system (100) of claim 5, wherein:
the base structure (12) comprises a support plate (13) on which the tilting support (19) and the first and second proximity sensors are fixed and a connection plate (14) mechanically connected to said slip (7).

8. The system (100) of claim 7, wherein said tilting support (19) comprises:
a pivot (24) fixed to said base structure (12);
a rotatable element (23) mounted to said base structure (12) by said pivot (24);
wherein the activation body (20) is fixed at a first portion end of the rotatable element (23) and the first contact element (21) and the second element (22) are fixed to a second portion end of the rotatable element (23) and the first portion end and the second portion end of the rotatable element (23) are on opposite sides with respect to the pivot (24)

9. The system (160) of claim 1, configured to operate as proof test system of said optical fibre (2) and further comprising:
- a test apparatus (120) configured to subject the optical fibre (2) unwound from the draw spool (1) to a proof test procedure;
- a take-up apparatus (130) configured to wound the optical fibre (2) exiting the test apparatus (120) onto a shipping spool (39).

10. The system (160) of claim 9, wherein:
said test apparatus (120) comprises: an input capstan (29) provided by a first drive motor and an output capstan (34) provided by a second drive motor and a plurality of intermediate pulleys (31, 32);
wherein:
the input capstan (29), the plurality of intermediate pulleys (31, 32) and the output capstan (34) are configured to guide the optical fibre (2) and apply a force to the optical fibre (2) depending from rotation velocities of said output capstan (34) and said input capstan (29).

11. The system (160) of claim 10, wherein test apparatus (120) comprises:
a load cell (35) configured to measure a tension value associated with optical fibre (2) in the test apparatus (160).

12. The system (160) of claim 10, wherein the test apparatus (120) further comprises:
a fibre break cell (36) configured to detect a break of the optical fibre (2) and send corresponding break detection signal to the controller (6);
wherein:
the controller (6) being configured to initiate a stop of the movement of the optical fibre (2) towards the take-up apparatus (130) basing on said break detection signal.

13. The system (160) of claim 10, wherein said take-up apparatus (130) comprises:
a movable take-up arm (40) which is configured to be engaged with the optical fibre (2) and move parallel to a further longitudinal axis (Y) defined by said shipping spool (39).

14. The system (160) of claim 9, further comprising:
an anti-whipping assembly (140) having at least one accumulator pulley (37) guiding the optical fibre (2) existing the output capstan (34).

## Patentansprüche

1. Abwickelsystem (100, 160) für optische Fasern mit einer Zugspule (1), um die eine optische Faser (2) gewickelt ist und die eine Längsachse (X) definiert;
einen Abwickelarm (3), der parallel zu der Längsachse (X) beweglich ist und mit einem Abwickelabschnitt (4) der optischen Faser (2) in Eingriff steht;
eine Steuerung (6), die so konfiguriert ist, dass sie erste und zweite Positionssignale empfängt und bewirkt, dass sich der Abwicklungsarm (3) selektiv in eine erste Richtung und in eine entgegengesetzte zweite Richtung bewegt;
wobei das System (100, 160) **dadurch gekennzeichnet ist, dass** es ferner umfasst:
Einen ersten (15) und einen zweiten Näherungssensor (16), die an dem Abwickelarm (3) angebracht sind;
eine Kippstütze (19), die drehbar an dem Abwicklungsarm (3) angebracht ist;
einen Aktivierungskörper (20), der an dem Kippträger (19) befestigt ist und sich zwischen dem ersten (15) und dem zweiten Näherungssensor (16) erstreckt, um von den Sensoren entsprechend den von dem Kippträger (19) eingenommenen Positionen selektiv erfasst zu werden;
ein erstes (21) und ein zweites Kontaktelement (22), die an dem Kippträger (19) befestigt sind und einen Zwischenraum (25) definieren, in dem sich der Ablaufabschnitt (4) bewegen kann; wobei der Kippträger (19) unter einer entsprechenden Einwirkung des Ablaufabschnitts (4) auf das erste (21) und das zweite (22) Kontaktelement drehbar ist und so konfiguriert ist, dass er selektiv angenommen wird:
Eine erste Erfassungsposition, in der der Aktivierungskörper (20) von dem zweiten Näherungssensor (16) erfasst wird, der ein Positionssignal erzeugt, und eine zweite Erfassungsposition, in der der Aktivierungskörper (20) von dem ersten Näherungssensor (15) erfasst wird, der ein weiteres Positionssignal erzeugt.

2. System (100) nach Anspruch 1, wobei der erste (15) und der zweite (16) Näherungssensor jeweils eine Sensorvorrichtung umfasst, die ausgewählt ist aus der Gruppe: Induktiver Sensor, optischer Sensor, kapazitiver Sensor, magnetischer Sensor.

3. System (100) nach Anspruch 1, wobei die Steuerung (6) so konfiguriert ist, dass sie:
Abwechselnd das Positionssignal und das weitere Positionssignal zu empfangen und den Abwicklungsarm (3) zu veranlassen, sich selektiv in die erste Richtung und in die entgegengesetzte zweite Richtung zu bewegen, um eine Position zu erreichen, in der der Aktivierungskörper (20) weder vom ersten Näherungssensor noch vom zweiten Näherungssensor erfasst wird.

4. System nach Anspruch 1, das außerdem Folgendes umfasst:
Eine Basisstruktur (12), die den ersten (15) und zweiten Näherungssensor (16) und die Kippstütze (19) trägt.

5. System (100) nach Anspruch 4, wobei der Abwicklungsarm (3) Folgendes umfasst:
Einen beweglichen Schlitten (7), der so angeordnet ist, dass er parallel zu der Längsachse (X) verschoben werden kann; wobei die Basisstruktur (12) mechanisch mit dem beweglichen Schlitten (7) verbunden ist;
mindestens eine erste Riemenscheibe (8), die mechanisch mit dem beweglichen Gleitstück (7) verbunden ist, um das Abwickeln des Abwickelteils (4) von der Zugspule (1) zu führen.

6. System (100) nach Anspruch 5 umfasst ferner eine Bewegungsbaugruppe (5), die so konfiguriert ist, dass sie den beweglichen Abwickelarm (3) in die erste und zweite Richtung bewegt, und die Folgendes aufweist:
Einen linearen Aktuator (11), der mit dem Schlitten (7) verbunden ist;
einen Motor (10), der mechanisch mit dem linearen Stellglied (11) verbunden ist, um den Schlupf (7) zu bewegen, und der so konfiguriert ist, dass er von der Steuerung (6) gesteuert wird.

7. System (100) nach Anspruch 5, wobei:
Die Basisstruktur (12) eine Trägerplatte (13) umfasst, auf der die Kippstütze (19) und der erste und zweite Näherungssensor befestigt sind, und eine Verbindungsplatte (14), die mechanisch mit dem Schlitten (7) verbunden ist.

8. System (100) nach Anspruch 7, wobei die Kippstütze (19) Folgendes umfasst:
Einen Drehzapfen (24), der an der Basisstruktur (12) befestigt ist;
ein drehbares Element (23), das durch den Drehzapfen (24) an der Grundstruktur (12) befestigt ist;
wobei der Aktivierungskörper (20) an einem ersten Abschnittsende des drehbaren Elements (23) befestigt ist und das erste Kontaktelement (21) und das zweite Element (22) an einem zweiten Abschnittsende des drehbaren Elements (23) befestigt sind und das erste Abschnittsende und das zweite Abschnittsende des drehbaren Elements (23) auf gegenüberliegenden Seiten in Bezug auf den Drehzapfen (24) liegen.

9. System (160) nach Anspruch 1, das so konfiguriert ist, dass es als Proof-TestSystem für die optische Faser (2) arbeitet, und das ferner umfasst:
- eine Prüfvorrichtung (120), die so konfiguriert ist, dass sie die von der Zugspule (1) abgewickelte optische Faser (2) einem Prüfverfahren unterzieht;
- eine Aufwickelvorrichtung (130), die so konfiguriert ist, dass sie die aus der Prüfvorrichtung (120) austretende optische Faser (2) auf eine Transportspule (39) aufwickelt.

10. Das System (160) nach Anspruch 9, wobei:
die Prüfvorrichtung (120) umfasst: Eine Eingangsrolle (29), die von einem ersten Antriebsmotor bereitgestellt wird, und eine Ausgangsrolle (34), die von einem zweiten Antriebsmotor bereitgestellt wird, und eine Vielzahl von Zwischenrollen (31, 32);
wobei:
Die Eingangsumlenkrolle (29), die Vielzahl von Zwischenscheiben (31, 32) und die Ausgangsspindel (34) so konfiguriert sind, dass sie die optische Faser (2) führen und eine Kraft auf die optische Faser (2) ausüben, die von den Drehgeschwindigkeiten der Ausgangsspindel (34) und der Eingangsspindel (29) abhängt.

11. System (160) nach Anspruch 10, wobei die Testvorrichtung (120) umfasst:
Eine Kraftmessdose (35), die so konfiguriert ist, dass sie einen mit der optischen Faser (2) in der Prüfvorrichtung (160) verbundenen Spannungswert misst.

12. System (160) nach Anspruch 10, wobei die Prüfvorrichtung (120) ferner umfasst:
Eine Faserbruchzelle (36), die so konfiguriert ist, dass sie einen Bruch der optischen Faser (2) erkennt und ein entsprechendes Brucherkennungssignal an den Controller (6) sendet;
wobei:
Die Steuerung (6) so konfiguriert ist, dass sie einen Stopp der Bewegung der optischen Faser (2) in Richtung der Aufwickelvorrichtung (130) auf der Grundlage des Brucherfassungssignals einleitet.

13. System (160) nach Anspruch 10, wobei die Aufwickelvorrichtung (130) umfasst:
Einen beweglichen Aufnahmearm (40), der so konfiguriert ist, dass er mit der optischen Faser (2) in Eingriff kommt und sich parallel zu einer weiteren Längsachse (Y) bewegt, die durch die Transportspule (39) definiert ist.

14. System (160) nach Anspruch 9, das ferner umfasst:
Eine Anti-Whipping-Anordnung (140) mit mindestens einer Akkumulatorenriemenscheibe (37), die die optische Faser (2) führt, die an der Ausgangsspule (34) vorhanden ist.

## Revendications

1. Système de déroulement de fibre optique (100, 160) comprenant :
une bobine de tirage (1) autour de laquelle est enroulée une fibre optique (2) et définissant un axe longitudinal (X) ;
un bras de déroulement (3) mobile parallèlement audit axe longitudinal (X) et mis en prise avec une partie de déroulement (4) de la fibre optique (2) ;
un dispositif de commande (6) configuré pour recevoir des premier et second signaux de position et provoquer le déplacement sélectif dudit bras de déroulement (3) dans une première direction et dans une seconde direction opposée ;
le système (100, 160) étant **caractérisé en ce qu'**il comprend en outre :
un premier (15) et un second (16) capteurs de proximité montés sur ledit bras de déroulement (3) ;
un support basculant (19) monté en rotation sur ledit bras de déroulement (3) ;
un corps d'activation (20) fixé audit support basculant (19) et s'étendant entre lesdits premier (15) et second (16) capteurs de proximité à détecter sélectivement par lesdits capteurs selon des positions prises par le support basculant (19) ;
un premier (21) et un second (22) éléments de contact fixés audit support basculant (19) et définissant un espace intermédiaire (25) dans lequel la partie de déroulement (4) peut se déplacer ;
dans lequel le support basculant (19) peut tourner sous l'effet d'une action correspondante de la partie de déroulement (4) sur lesdits premier (21) et second (22) éléments de contact et est configuré pour prendre sélectivement :
une première position de détection dans laquelle le corps d'activation (20) est détecté par le second capteur de proximité (16) qui génère un signal de position, et
une seconde position de détection dans laquelle le corps d'activation (20) est détecté par le premier capteur de proximité (15) qui génère un signal de position supplémentaire.

2. Système (100) selon la revendication 1, dans lequel lesdits premier (15) et second (16) capteurs de proximité comportent respectivement un dispositif capteur choisi dans le groupe constitué de : un capteur inductif, des capteurs optiques, des capteurs capacitifs, et des capteurs magnétiques.

3. Système (100) selon la revendication 1, dans lequel le dispositif de commande (6) est configuré pour :
recevoir alternativement le signal de position et le signal de position supplémentaire et amener ledit bras de déroulement (3) à se déplacer sélectivement dans la première direction et dans la seconde direction opposée afin d'atteindre une position dans laquelle le corps d'activation (20) n'est détecté ni par le premier capteur de proximité ni par le second capteur de proximité.

4. Système selon la revendication 1, comportant en outre :
une structure de base (12) supportant les premier (15) et second (16) capteurs de proximité et le support basculant (19).

5. Système (100) selon la revendication 4, dans lequel ledit bras de déroulement (3) comprend :
un coulisseau mobile (7) agencé pour être translaté parallèlement audit axe longitudinal (X) ; ladite structure de base (12) étant reliée mécaniquement audit coulisseau mobile (7) ;
au moins une première poulie (8) reliée mécaniquement au coulisseau mobile (7) pour guider un déroulage de ladite partie de déroulement (4) à partir de la bobine de tirage (1).

6. Système (100) selon la revendication 5, comprenant en outre un ensemble de déplacement (5) configuré pour déplacer le bras de déroulement mobile (3) dans lesdites première et seconde directions et présentant :
un actionneur linéaire (11) relié audit coulisseau (7) ;
un moteur (10) relié mécaniquement audit actionneur linéaire (11) pour déplacer le coulisseau (7) et configuré pour être commandé par ledit dispositif de commande (6).

7. Système (100) selon la revendication 5, dans lequel :
la structure de base (12) comprend une plaque support (13) sur laquelle sont fixés le support basculant (19) et les premier et second capteurs de proximité et une plaque de liaison (14) reliée mécaniquement audit coulisseau (7).

8. Système (100) selon la revendication 7, dans lequel ledit support basculant (19) comprend :
un pivot (24) fixé à ladite structure de base (12) ;
un élément rotatif (23) monté sur ladite structure de base (12) par ledit pivot (24) ;
dans lequel le corps d'activation (20) est fixé au niveau d'une première extrémité de partie de l'élément rotatif (23) et le premier élément de contact (21) et le second élément (22) sont fixés au niveau d'une seconde extrémité de partie de l'élément rotatif (23) et la première extrémité de partie et la seconde extrémité de partie de l'élément rotatif (23) sont sur des côtés opposés par rapport au pivot (24).

9. Système (160) selon la revendication 1, configuré pour fonctionner en tant que système d'essai d'épreuve de ladite fibre optique (2) et comprenant en outre :
- un appareil d'essai (120) configuré pour soumettre la fibre optique (2) déroulée de la bobine de tirage (1) à une procédure d'essai d'épreuve ;
- un appareil d'enroulement (130) configuré pour enrouler la fibre optique (2) sortant de l'appareil d'essai (120) sur une bobine d'expédition (39).

10. Système (160) selon la revendication 9, dans lequel :
ledit appareil d'essai (120) comprend : un cabestan d'entrée (29) fourni par un premier moteur d'entraînement et un cabestan de sortie (34) fourni par un second moteur d'entraînement et une pluralité de poulies intermédiaires (31, 32) ;
dans lequel :
le cabestan d'entrée (29), la pluralité de poulies intermédiaires (31, 32) et le cabestan de sortie (34) sont configurés pour guider la fibre optique (2) et appliquer une force à la fibre optique (2) en fonction des vitesses de rotation dudit cabestan de sortie (34) et dudit cabestan d'entrée (29).

11. Système (160) selon la revendication 10, dans lequel l'appareil d'essai (120) comprend :
une cellule de pesée (35) configurée pour mesurer une valeur de tension associée à la fibre optique (2) dans l'appareil d'essai (160).

12. Système (160) selon la revendication 10, dans lequel l'appareil d'essai (120) comprend en outre :
une cellule de rupture de fibre (36) configurée pour détecter une rupture de la fibre optique (2) et envoyer un signal de détection de rupture correspondant au dispositif de commande (6) ;
dans lequel :
le dispositif de commande (6) étant configuré pour initier un arrêt du mouvement de la fibre optique (2) vers l'appareil d'enroulement (130) sur la base dudit signal de détection de rupture.

13. Système (160) selon la revendication 10, dans lequel ledit appareil d'enroulement (130) comprend :
un bras d'enroulement mobile (40) qui est configuré pour être mis en prise avec la fibre optique (2) et se déplacer parallèlement à un autre axe longitudinal (Y) défini par ladite bobine d'expédition (39).

14. Système (160) selon la revendication 9, comprenant en outre :
un ensemble anti-fouettement (140) ayant au moins une poulie d'accumulateur (37) guidant la fibre optique (2) sortant du cabestan de sortie (34).
